# EUROPEAN PATENT APPLICATION

(11) **EP 3 101 672 A1**
(43) Date of publication of application: **07.12.2016**
(21) Application number: 15170200.8
(22) Date of filing: 02.06.2015
(51) Int. Cl.: H01H 25/04, B60K 37/06, G05G 9/047

(54) **LIGHT PIPE FOR A FOUR-WAY NAVIGATION SWITCH**

(71) Applicant: Delphi Technologies, Inc., Troy MI 48007 (US)
(72) Inventor: COSS, Hipolito, 32548 Cd Juarez (MX)
(74) Representative: Delphi France SAS

(57) **Abstract**

An illuminated four-way navigation switch assembly (12) includes four switches (18A, 18B, 18C, 18D), two light sources (22A, 22B), a secondary switch (14), and a light pipe (26). The four switches are configured to detect a directional actuation of the assembly (12) in one of four directions (20, UP, DOWN, LEFT RIGHT). The secondary switch (14) is configured to detect a secondary actuation of the assembly (12). The light pipe (26) is configured to define an opening (28) to receive the secondary switch (14). The light pipe (26) is also configured to actuate one or more of the four switches in response to the directional actuation. The light pipe (26) is also configured to define four graphics (24A, 24B, 24C, 24D) to indicate the four directions (20) of the directional actuation. The light pipe (26) is also configured to define a light guide portion (30D) to guide light (42) from the two light sources (22A, 22B) to the four graphics (24A, 24B, 24C, 24D).

## Description

### TECHNICAL FIELD OF INVENTION

This disclosure generally relates to an illuminated four-way navigation switch assembly, and more particularly relates to a light pipe configured to actuate one or more of four switches in response to the directional actuation of the assembly, and a light guide portion to guide light from two light sources to four graphics of the assembly.

### BACKGROUND OF INVENTION

Various configurations of four-way navigation switches are known. A four-way navigation switch is useful to navigate through selection menus on various consumer electronic devices such as a television or a reconfigurable display in a vehicle. For automotive applications it is advantageous to illuminate graphics on an actuation surface where a person operating the switch presses so the spot to press is easily located when operating the vehicle at night or in a dark environment. As cost is an important consideration for consumer electronics and automotive applications, a design that reduces the cost of a four-way switch is generally advantageous.

### SUMMARY OF THE INVENTION

In accordance with one embodiment, an illuminated four-way navigation switch assembly is provided. The assembly includes four switches, two light sources, a secondary switch, and a light pipe. The four switches are configured to detect a directional actuation of the assembly in one of four directions. The secondary switch is configured to detect a secondary actuation of the assembly. The light pipe is configured to define an opening to receive the secondary switch. The light pipe is also configured to actuate one or more of the four switches in response to the directional actuation. The light pipe is also configured to define four graphics to indicate the four directions of the directional actuation. The light pipe is also configured to define a light guide portion to guide light from the two light sources to the four graphics.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is front view of a steering wheel equipped with an illuminated four-way navigation switch assembly, in accordance with one embodiment;
Fig. 2 is a front view of the illuminated four-way navigation switch assembly prior to installation into the steering wheel of Fig. 1 in accordance with one embodiment;
Fig. 3 is an exploded isometric view of the illuminated four-way navigation switch assembly of Fig. 2 in accordance with one embodiment;
Fig. 4 is an isometric view of selected parts of the illuminated four-way navigation switch assembly of Fig. 2 in accordance with one embodiment;
Fig. 5 is a first perspective side view of selected parts of the illuminated four-way navigation switch assembly of Fig. 2 in accordance with one embodiment; and
Fig. 6 is a second perspective side view of selected parts of the illuminated four-way navigation switch assembly of Fig. 2 in accordance with one embodiment.

### DETAILED DESCRIPTION

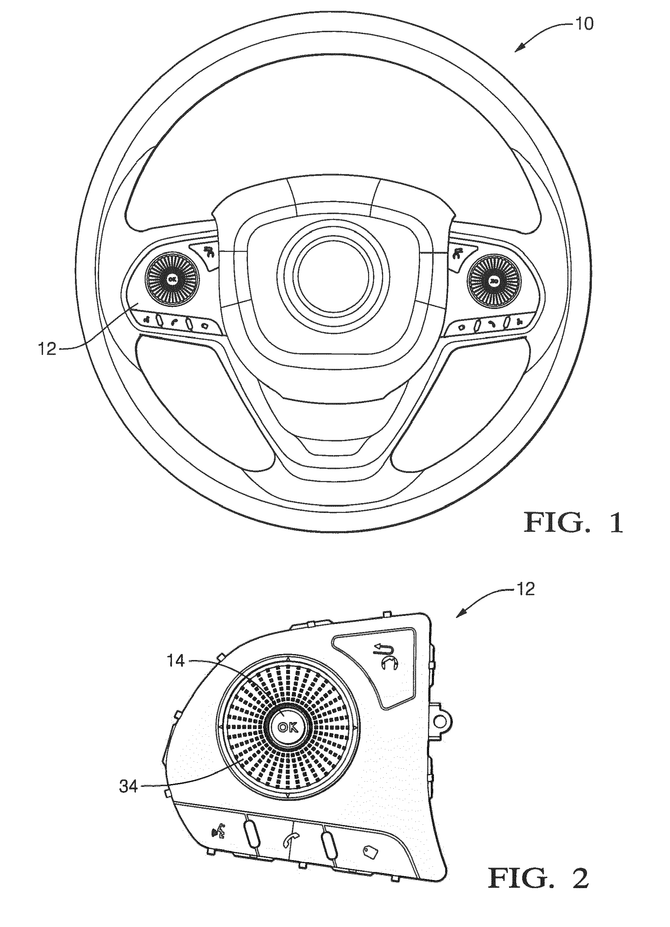

Fig. 1 illustrates a non-limiting example of a steering wheel 10 suitable for use in a vehicle (not shown) that is equipped with an illuminated four-way navigation switch assembly, hereafter referred to as the assembly 12. The assembly 12 may be used by an operator (not shown) of the vehicle to navigate up/down and right/left to select or highlight a command on a menu, as will be recognized buy those in the art. Alternatively, the directions may have predetermined functions such as the up/down to increase/decrease the volume of the vehicle entertainment system, and right/left to select from a list of broadcast stations or skip/replay a song on a compact disk (CD).

Fig. 2 illustrates a non-limiting example of the assembly 12 prior to installation into the steering wheel 10. The assembly 12 may include a secondary switch 14 that may be used to, for example, select (OK) the command highlighted on the menu once the four-way function is used to highlight the desire command. Alternatively, the secondary switch 14 may be a mute button for the vehicle entertainment system, possibly acting in combination with answering an incoming phone call. While the secondary switch 14 in this example is illustrated as a push-button type switch, the secondary switch 14 may be a thumbwheel or other type of device capable of variable operation. Furthermore, while the assembly 12 is shown as being equipped with other individual push-button type switches, it should be recognized that these are not required features of the assembly 12.

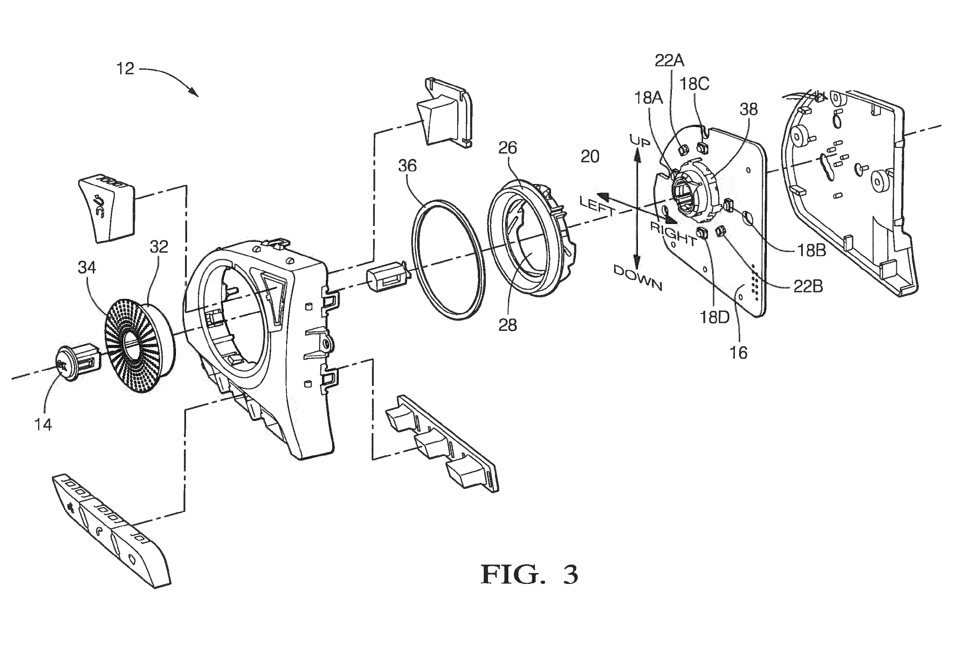

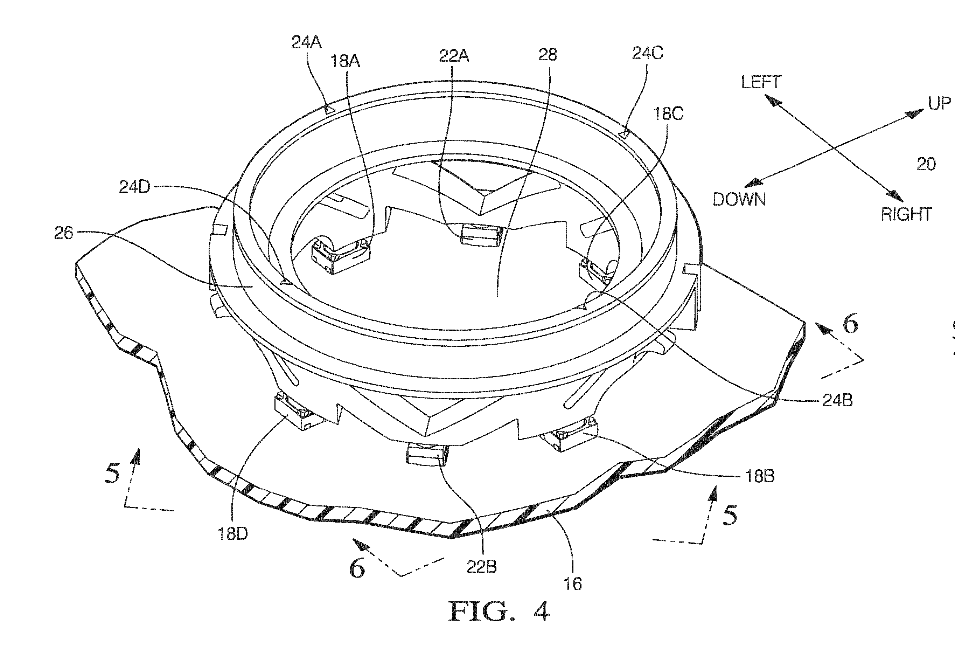

Figs. 3 and 4 further illustrate non-limiting details of the assembly 12. The assembly 12 preferably includes a circuit board 16 upon which four switches 18A, 18B, 18C, 18D are mounted (e.g. soldered) such that the assembly 12 can be configured to detect a directional actuation of the assembly 12 in one of four directions 20 (UP, DOWN, RIGHT, LEFT). It is contemplated that the secondary switch 14 is also mounted on the circuit board 16. However, the secondary switch 14 is shown here as something comparable to a push button surface only for the purpose of simplifying the illustration. The secondary switch 14 is generally configured to detect a secondary actuation of the assembly 12 such as pressing the secondary switch 14, or the rotation of a thumbwheel if so equipped.

The assembly 12 is equipped with two light sources 22A, 22B that are used to illuminate four graphics 24A, 24B, 24C, 24D that indicate the four directions 20 of directional actuation (e.g. - UP, DOWN, RIGHT, LEFT). As will become apparent in the description that follows, it is advantageous that the configuration of the assembly 12 requires only the two light sources 22A, 22B to illuminate the four graphics 24A, 24B, 24C, 24D as it reduces costs when compared to navigation switches that require four light sources to illuminate four graphics.

In order to distribute the light from the two light sources 22A, 22B to illuminate the four graphics 24A, 24B, 24C, 24D, the assembly 12 includes a light pipe 26. The light pipe 26 also defines an opening 28 into which the secondary switch 14 is received. By this arrangement, the four graphics 24A, 24B, 24C, 24D are arranged around or surround the secondary switch 14 so that the secondary switch 14 can be readily located by an operator even if there is little or no ambient lighting.

The light pipe 26 is preferably made of a light-conductive material such as a clear acrylic and painted where light is not to be emitted. If the four graphics 24A, 24B, 24C, 24D are relatively small compared to the overall size of the assembly 12, the assembly 12 may advantageously include a spacer 32 that defines a surface 34 that is coupled to the light pipe 26 so the operator can press in on the surface 34 in order to actuate one or more of the four switches 18A, 18B, 18C, 18D. The assembly 12 may also include a compliant seal 36 to minimize rattle noise and reduce the leakage of light from the two light sources 22A, 22B to the face of the assembly 12 viewed by the operator.

Optionally, the spacer 32 may be rotatable, and the circuit board 16 may include an encoder 38 or potentiometer to form the thumbwheel introduced above. By configuring the light pipe 26 as illustrated, the light distribution function of the light pipe is performed around the perimeter of the assembly 12 so that the opening 28 is large enough to easily accommodate a push-button type secondary switch, a thumbwheel type secondary switch, or both the push-button and thumbwheel type secondary switches as illustrated in Figs. 2-3. That is, the spacer 32 can be both rotated as a means of controlling some variable signal, and the spacer can be actuated in one of the four directions 20 to actuate one of the four switches 18A, 18B, 18C, 18D.

The light pipe 26 is generally configured to cooperatively provide at least four key functions. First, the light pipe 26 defines the opening 28 to receive the secondary switch 14 such as a push-button type switch and/or a thumbwheel type switch. Second, the light pipe 26 actuates one of the four switches 18A, 18B, 18C, 18D in response to directional actuation in one of the four directions 20. Third, the light pipe 26 defines the four graphics 24A, 24B, 24C, 24D to indicate the four directions (UP, DOWN, RIGHT, LEFT) of the directional actuation. The four graphics 24A, 24B, 24C, 24D may be defined by laser etching or some other pad print on the exposed surface of the light pipe, as will be recognized by those in the art. Fourth, the light pipe 26 defines the light guide portion 30D (plus three other light guide portions not specifically shown only to simplify the illustration) to guide light from the two light sources 22A, 22B to the four graphics 24A, 24B, 24C, 24D.

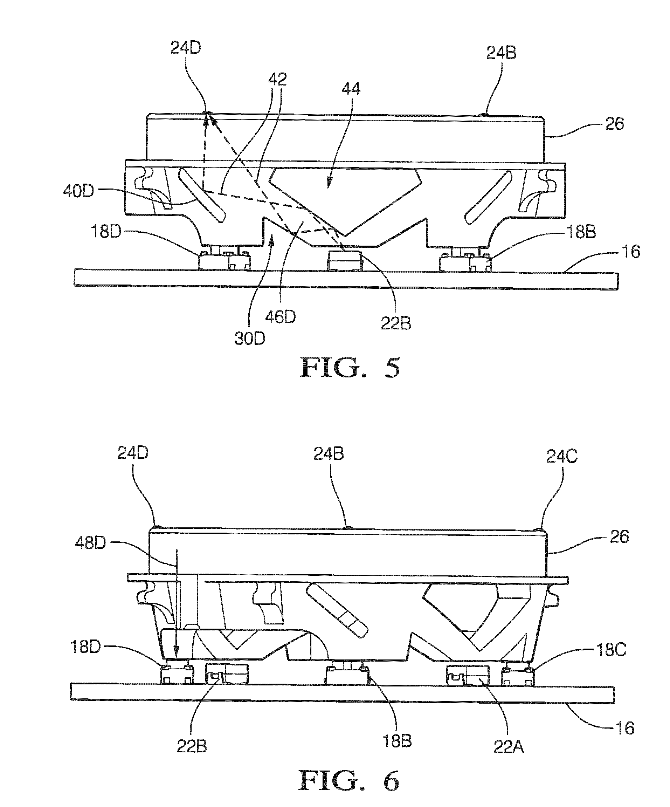

Figs. 5 and 6 further illustrate non-limiting details of the light pipe 26. In order to direct as much of the light from the light source 22B to the graphic 24B and/or the graphic 24D, the light pipe 26 is advantageously configured to define a light guide portion 30D to guide light from the light source 22B to the graphic 24D. As will be explained in more detail below, the light guide portion 30D is configured to direct and/or reflect light from the light source 22B to the graphic 24D.

In one embodiment, the light guide portion 30D may include or define a slot 40D oriented at an angle effective to reflect light 42 from the light source 22B to the graphic 24D. As can be seen in the illustrations, the light pipe 26 is configured to define a slot for each of the four graphics 24A, 24B, 24C, 24D such that each graphic is illuminated by light from one of the two light sources 22A, 22B reflected toward one of the four graphics 24A, 24B, 24C, 24D. While the slot 40D is shown as being relatively straight, it is recognized that it may be advantageous if the slot 40D is curved to better focus the light 42 on a small spot defined by the graphic 24D.

The two light sources 22A, 22B may emit light in an omnidirectional manner, so the light guide portion 30D may be advantageously configured to define a V-shaped feature 44 that is shaped to be effective to reflect light from one of the two light sources (e.g. 22B) toward two of the four graphics (e.g. 24B, 24D). By providing the V-shaped feature 44, two graphic can be illuminated by one light source. In this non-limiting example, there is a second V-shaped feature on opposite side of the light pipe to divide light from the light source 22A to the graphics 24A, 24C.

Through computer modeling and experimentation, it was discovered that the illumination of the graphic 24D may be improved if the light guide portion 30D defines a light path 46D that is characterized as wider at a graphic end (i.e. the end proximate the graphic 24D) than at a light source end (i.e. the end proximate the light source 22B). As with the slot, it is contemplated that in some instances the walls of the light path 46D that reflect the light 42 toward graphic 24D may also be curved in order to improve the illumination of the graphic 24D.

As suggested above, the light guide portion 30D defines a light path 46D and a slot 40D that guides the light 42 from one of the two light sources (e.g. 22B) toward one of the four graphics (e.g. 24D). In order to also actuate one of the four switches (e.g. 18D) in response to directional actuation in one of the four directions 20 (e.g. DOWN), the light pipe 26 also defines a force path 48D to direct an actuation force from one of the four graphics (e.g. 24D) to one of the four switches (e.g. 18D). In order for the light pipe 26 in this example to both conduct light to illuminate the graphics and conduct force to actuate the switches, the force path intersects the light path. That is, the force path 48D and the light path 46D cross paths.

Accordingly, an illuminated four-way navigation switch assembly (the assembly 12) is provided. The trend of the market for automotive switches is to have as much control as possible for the different options in the car on the steering wheel. To accomplish that, the assembly 12 described herein allows the user to navigate thru the different menus and choices offered by the navigation, audio, cluster screen and other vehicle systems. To accommodate the assembly 12 on the steering wheel 10 is a challenge because of the limited space for the switches. Traditional mechanical pushbutton systems are available but they take space that could be used to include other functions. The potential reduced space occupied by the efficient design of the assembly 12 allows for adding a thumbwheel between the more conventional center pushbutton and the four directional pushbuttons. The assembly provides for an integrated four-way selector pushbutton, actuator & light pipe using only two light sources to illuminate four graphics. The compact light pipe geometry also allows for adjusting the diameter and graphics area without affecting the luminance on the graphics.

While this invention has been described in terms of the preferred embodiments thereof, it is not intended to be so limited, but rather only to the extent set forth in the claims that follow.

## Claims

1. An illuminated four-way navigation switch assembly (12), said assembly (12) comprising:
four switches (18A, 18B, 18C, 18D) configured to detect a directional actuation of the assembly (12) in one of four directions (20, UP, DOWN, LEFT, RIGHT);
two light sources (22A);
**characterized in that** it comprises:
a secondary switch (14) configured to detect a secondary actuation of the assembly (12);
a light pipe (26) configured to define an opening (28) to receive the secondary switch (14), actuate one or more of the four switches (18A, 18B, 18C, 18D) in response to the directional actuation, define four graphics (24A, 24B, 24C, 24D) to indicate the four directions (20) of the directional actuation, and define a light guide portion (30D) to guide light (42) from the two light sources (22A, 22B) to the four graphics (24A, 24B, 24C, 24D).

2. The assembly (12) in accordance with claim 1, wherein the light guide portion (30D) defines a slot (40D) oriented at an angle effective to reflect light (42) from one of the two light sources (22A, 22B) toward one of the four graphics (24A, 24B, 24C, 24D).

3. The assembly (12) in accordance with claim 1 or 2, wherein the light guide portion (30D) defines a v-shaped feature (44) effective to reflect light (42) from one of the two light sources (22B) toward two of the four graphics (24B, 24D).

4. The assembly (12) in accordance with any one of claims 1 to 3, wherein the light guide portion (30D) defines a light path (46D) that is characterized as wider at a graphic (24D) end than at a light source (22B) end.

5. The assembly (12) in accordance with any one of claims 1 to 4, wherein the light guide portion (30D) defines a light path (46D) that guides light (42) from one of the two light sources (22B) toward one of the four graphics (24D), and defines a force path (48D) to direct an actuation force from one of the four graphics (24D) to one of the four switches (18D), wherein the force path (48D) intersects the light path (46D).
